# EUROPEAN PATENT APPLICATION

(11) **EP 1 980 942 A1**
(43) Date of publication of application: **15.10.2008**
(21) Application number: 08154037.9
(22) Date of filing: 03.04.2008
(51) Int. Cl.: G06F 9/455, G06F 9/50

(54) **Tessellated virtual machines for common computing goals**

(30) Priority: 10.04.2007 US 784869
(71) Applicant: Novell, Inc., Provo, Utah 84606-6169 (US)
(72) Inventor: Carter, Stephen R, Spanish Fork, UT 84660 (US); Wipfel, Robert A., Draper, UT 84020 (US)
(74) Representative: Hanna, Peter William Derek

(57) **Abstract**

In a computing environment, an association and layout of virtual machines (38) exist as a system instantiated for a common computing goal, such as providing a data center with an email system for an enterprise. Irrespective of physical computing devices (15,15'), a template (31,33,35) exists for each of the virtual machines (38) according to a role of the common computing goal, including a definition for external connectivity (40-90) with other virtual machines. From a template library (112), certain of the virtual machine templates are selected (2) and tessellated (3) into an application (100) functioning to accomplish (4) the computing goal. Collections of tessellated applications (100, 100', 100") may be reposited in a library (120) so that more than one application may be combined with another to achieve yet another computing goal, for example. Ultimately, tessellated applications provide a new computing paradigm to counter present-day computing complexities and cumbersomeness as systems evolve and become more regulated.

## Description

### FIELD OF THE INVENTION

Generally, the present invention relates to computing system environments contemplative of a virtual machine. Particularly, it relates to pluralities of virtual machines assembled to achieve common computing goals, such as providing an email system for a data center of an enterprise. In this regard, tessellated applications establish a computing paradigm for achieving the computing goal according to an entirety of its individual components. Various features relate to library and manager functions and their interaction. Validation, certification, and applications of pluralities of tessellated applications are other noteworthy features, to name a few.

### BACKGROUND OF THE INVENTION

The processes running in a data center, for example, are rapidly becoming more complex as a result of "virtualization." While virtualizing is solving a myriad of computing problems, the practice is beginning to bring to the surface new issues unique to the practice of virtualized data centers having high-density. Further, as regulatory pressures require that data center configurations be certified and regularly re-certified, more and more complex data centers will rapidly overload an enterprise's ability to keep all configurations under control and certified for completeness.

Consider further that single virtual machines are not the end-game in a virtualized data center. Indeed, virtual networks of virtual machines will become more and more prevalent. Consider also an enterprise that has some 50,000 employees with the attendant problems of an email system that large. Rather than configure and maintain a data center with separate email servers, post office servers, IMAP and POP3 servers, SMTP gateways, etc., it would be far easier to have a layout of virtual machines, each caring for one aspect of the email system, linked together virtually and configured to act as the "email system." Then, when the email system is deployed, each component is instantiated as per the "layout" with the data center personnel not worrying about where each virtual machine is located, how it is communicating with other email virtual machines, etc.

Accordingly, a need exists in the art of data centers, for example, to eliminate inflexibility and cumbersomeness as future needs evolve the center. It further should contemplate a paradigm of assemblies of virtual machines to service the functionality of the data center computing goal, or portions thereof. In turn, pragmatism, robustness and usability across the enterprise for solving the common computing goals are notable objectives. Such should also embrace governance scenarios and user identity awareness, while simultaneously enabling flexibility, integration with multiple applications and evolving technologies, and monitoring and noticing capabilities, to name a few. Naturally, any improvements along such lines should further contemplate good engineering practices, such as relative inexpensiveness, stability, ease of implementation, low complexity, security, unobtrusiveness, etc.

### SUMMARY OF THE INVENTION

The above-mentioned and other problems become solved by applying the principles and teachings associated with the hereinafter-described tessellating of virtual machines to achieve computing goals common to the tessellated application. In a departure from traditional assemblies of computing arrangements, tessellated applications contemplate an entirety of its individual components (e.g., virtual machines) when addressing computing goals and concerns, not just individual components. As its name implies, the act of tessellating provides an arrangement of applications having essentially no overlap or gaps in functionality which together serve the common computing goal. Altering or reconfiguring the application, however, also contemplates an entirety of individual components. In this manner, the entirety is certifiable and validated and piecemeal (re)configuration is avoided. Physical and hacking security are also enhanced.

In a representative embodiment, an assembly of virtual machines exists as a system instantiated for a common computing goal, such as providing a data center with an email system for an enterprise. Irrespective of arrangement and type of physical computing devices, a template exists for each of the virtual machines according to a role of the common computing goal, including a definition for external connectivity with other virtual machines. From a template library, certain virtual machine templates are selected and tessellated into an application functioning to accomplish the computing goal. Collections of tessellated applications may be reposited in a library so that more than one application may be combined with another to achieve other computing goals. Ultimately, tessellated applications provide a new computing paradigm to counter present-day computing complexities and cumbersomeness as systems evolve and become more regulated.

Still other embodiments contemplate computer program products with executable instructions, available as a download or on a computer-readable media, for implementing some or all of the foregoing on one or more physical computing devices.

These and other embodiments, aspects, advantages, and features of the present invention will be set forth in the description which follows, and in part will become apparent to those of ordinary skill in the art by reference to the following description of the invention and referenced drawings or by practice of the invention. The aspects, advantages, and features of the invention are realized and attained by means of the instrumentalities, procedures, and combinations particularly pointed out in the appended claims.

### BRIEF DESCRIPTION OF THE DRAWINGS

The accompanying drawings incorporated in and forming a part of the specification, illustrate several aspects of the present invention, and together with the description serve to explain the principles of the invention. In the drawings:
Figure 1 is a diagrammatic view in accordance with the present invention of representative physical devices in a computing system environment for tessellating virtual machines for common computing goals;
Figure 2 is a diagrammatic view in accordance with the present invention of a symbol representative of a virtual machine in a computing environment;
Figure 3 is a diagrammatic view in accordance with the present invention of an assembly of multiple virtual machines in a computing environment;
Figure 4 is a diagrammatic view in accordance with the present invention of a representative tessellated application of virtual machines for achieving common computing goals;
Figure 5 is a diagrammatic view and flow chart in accordance with the present invention of a representative tessellation of virtual machines into an application in a computing environment to achieve common computing goals; and
Figure 6 is a diagrammatic view in accordance with the present invention of a representative tessellation of pluralities of tessellated applications.

### DETAILED DESCRIPTION OF THE ILLUSTRATED EMBODIMENTS

In the following detailed description of the illustrated embodiments, reference is made to the accompanying drawings that form a part hereof, and in which is shown by way of illustration, specific embodiments in which the invention may be practiced. These embodiments are described in sufficient detail to enable those skilled in the art to practice the invention and like numerals represent like details in the various figures. Also, it is to be understood that other embodiments may be utilized and that process, mechanical, electrical, arrangement, software and/or other changes may be made without departing from the scope of the present invention. In accordance with the present invention, methods and apparatus for tessellating virtual machines for achieving common computing goals are hereinafter described. In a basic sense, the tessellating is an association and layout of the virtual machines interacting as a system of virtual machines to achieve common computing goals, such as providing an email system for a data center of an enterprise.

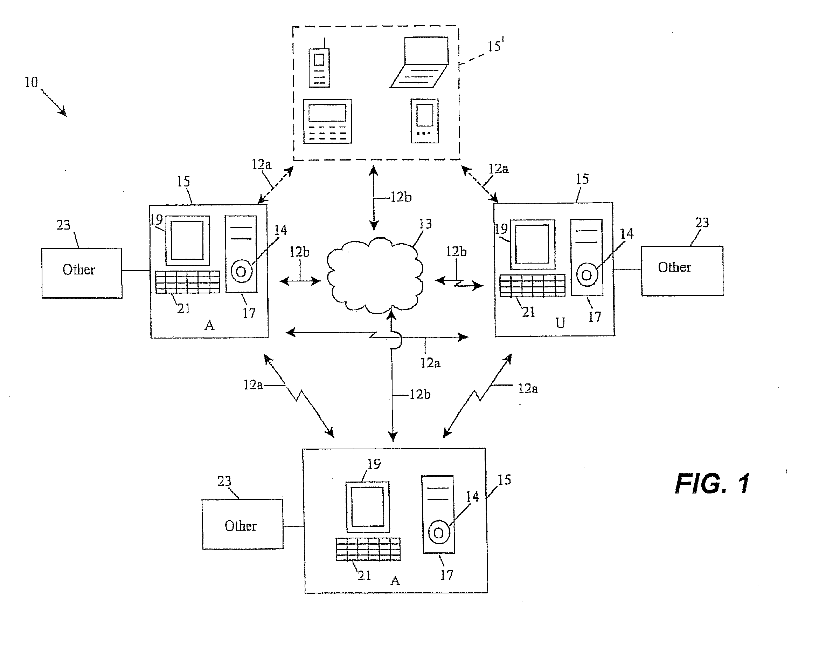

With reference to Figure 1, a representative environment 10 for the tessellating includes one or more physical computing devices 15 or 15', but their usage as part of one or more virtual machines is irrespective of the physical arrangement or type. In other words, one or more virtual machines may exist per one or more physical computing devices, or as software thereof, but such is largely irrelevant to the ultimately tessellated application.

In a traditional sense, an exemplary computing device exemplifies a server 17, such as a grid or blade server, or peer-to-peer arrangement, hosting applications, web functions, communications, files, etc. Alternatively, an exemplary computing device includes a general or special purpose computing device in the form of a conventional fixed or mobile computer 17 having an attendant monitor 19 and user interface 21. The computer internally includes a processing unit for a resident operating system, such as DOS, WINDOWS, MACINTOSH, VISTA, UNIX and LINUX, to name a few, a memory, and a bus that couples various internal and external units, e.g., other 23, to one another. Representative other items 23 (also available for tessellating) include, but are not limited to, PDA's, cameras, scanners, printers, microphones, joy sticks, game pads, satellite dishes, hand-held devices, consumer electronics, minicomputers, computer clusters, main frame computers, a message queue, a peer machine, a broadcast antenna, a server (web, application, communication, IMAP, POP, file, etc.), an AJAX client, a grid-computing node, a peer, a virtual machine, a web service endpoint, a cellular phone or palm device, or the like. The other items may also be stand alone computing devices 15' in the environment 10.

In either, storage devices are contemplated and may be remote or local. While the line is not well defined, local storage generally has a relatively quick access time and is used to store frequently accessed data, while remote storage has a much longer access time and is used to store data that is accessed less frequently. The capacity of remote storage is also typically an order of magnitude larger than the capacity of local storage. Regardless, storage is representatively provided for aspects of the invention contemplative of computer executable instructions, e.g., code or software, as part of computer program products on readable media, e.g., disk 14 for insertion in a drive of computer 17. Computer executable instructions may also be available as a download or reside in hardware, firmware or combinations in any or all of the depicted devices 15 or 15'.

When described in the context of computer program products, it is denoted that items thereof, such as modules, routines, programs, objects, components, data structures, etc., perform particular tasks or implement particular abstract data types within various structures of the computing system which cause a certain function or group of functions. In form, the computer product can be any available media, such as RAM, ROM, EEPROM, CD-ROM, DVD, or other optical disk storage devices, magnetic disk storage devices, floppy disks, or any other medium which can be used to store the items thereof and which can be assessed in the environment.

In network, the computing devices communicate with one another via wired, wireless or combined connections 12 that are either direct 12a or indirect 12b. If direct, they typify connections within physical or network proximity (e.g., intranet). If indirect, they typify connections such as those found with the internet, satellites, radio transmissions, or the like, and are given nebulously as element 13. In this regard, other contemplated items include servers, routers, peer devices, modems, T1 lines, satellites, microwave relays or the like. The connections may also be local area networks (LAN) and/or wide area networks (WAN) that are presented by way of example and not limitation. The topology is also any of a variety, such as ring, star, bridged, cascaded, meshed, or other known or hereinafter invented arrangement.

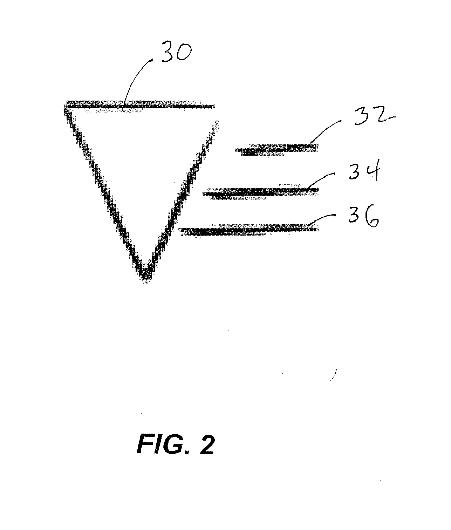

With the foregoing representative computing environment as backdrop, Figure 2 begins the illustration of tessellation. As a matter of convention beforehand, however, a symbol or diagram 30, in the form of an inverted triangle, represents a single virtual machine having a role or function in the common computing goal of the pluralities of virtual machines tessellated together. The three lines 32, 34, 36 to the side of the symbol represent the configuration of the virtual machine.

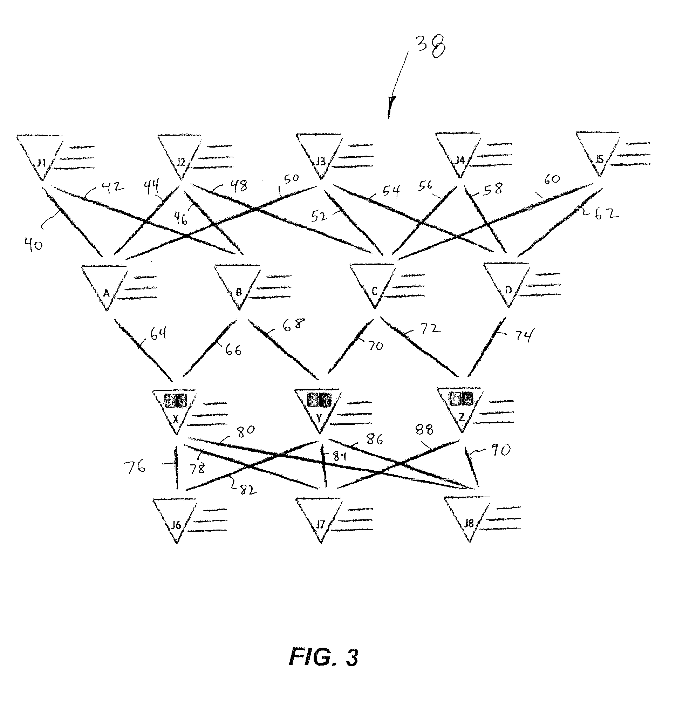

For instance, pluralities of virtual machines 38 in Figure 3 are further labeled as J1-J8, A-D and X-Z. The configuration of any one virtual machine for achieving the common computing goal of providing an email system, might consist of the virtual machines of A, B, C, and D as end-user email servers, while the virtual machines labeled X, Y, and Z are representative of email post offices. The J1 through J8 virtual machines are representatively various gateways that allow the email system to work (e.g., IMAP, POP, SMTP, Apache, etc.). The configuration, therefore, depends upon what role the virtual machine assumes. That is, if a virtual machine is a POP3 server, its configuration will be that attendant with POP3 functionality and skilled artisans understand its details. Between the various virtual machines are direct or indirect communication lines 40, 42, 44, 46 ... 90 externally connecting the various virtual machines in some kind of communication channel that performs some function of the common computing goal, e.g., the overarching email system. (Not shown, however, are communication lines that would connect to a WAN or Internet (left out for clarity).)

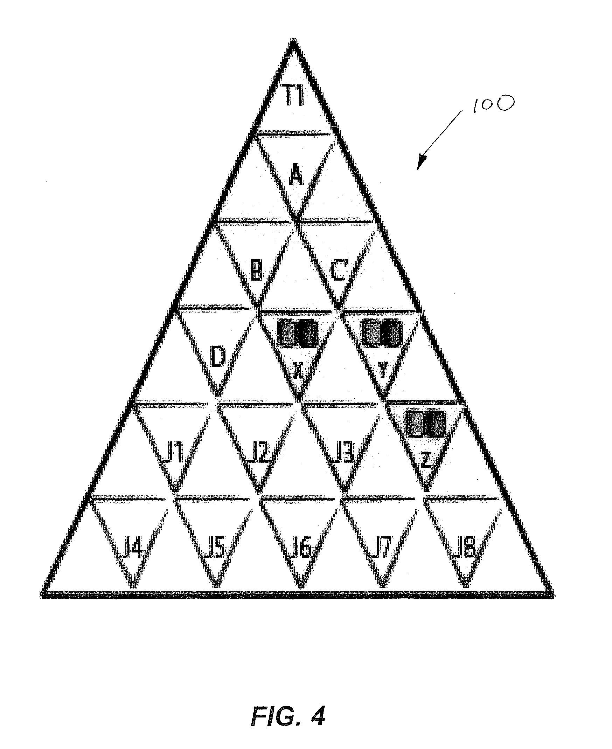

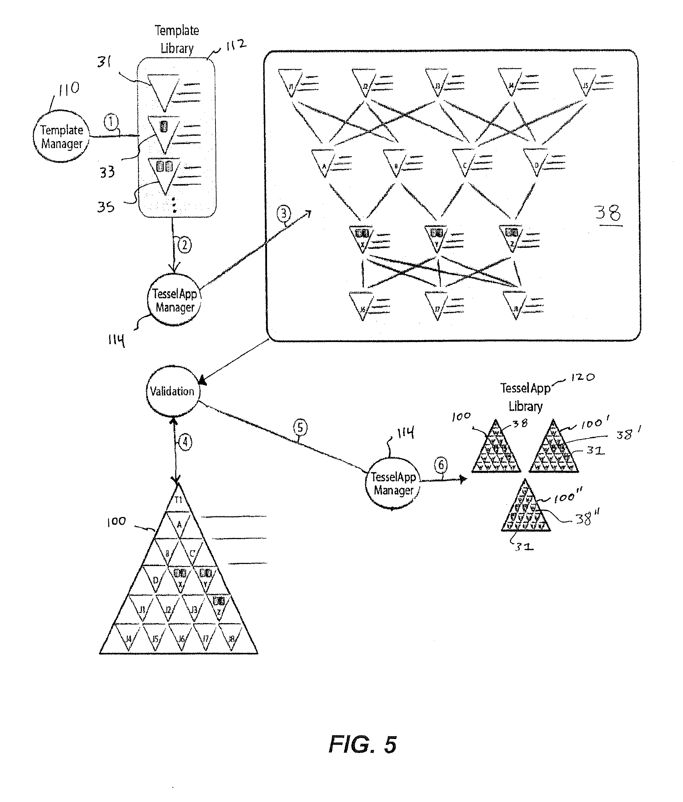

In turn, Figure 4 shows the tessellation T1 or 100 of the virtual machines for accomplishing the common computing goal. In form, it is an application bound together in its entirety that is always considered as an entirety of virtual machines, and not just its individual virtual machine components. In other words, changing only the configuration of virtual machine J3 or virtual machine B is not allowed. Instead, any change or reconfiguration to any part or component of the tessellation 100 requires that the status and functioning of the entire tessellated application be validated and certified for accomplishing the computing goal common to the entirety of virtual machines. In this manner, all of the elements or components needed to instantiate the total tessellated system are held in a single application definition that can be deployed by virtual environment managers. Also, the common computing goal is decentralized which enhances security. It provides flexibility in management as will be seen with regard to Figure 5.

Namely, a virtual machine template manager 110, such as a system administrator in an enterprise, defines a virtual machine template for each of the virtual machines per a role of the common computing goal. As before, this might consist of defining one virtual machine as a POP3 server, while defining another as an email or IMAP server. Also, this functionality includes defining an external connectivity with other virtual machines and may consist of defining various applications that can be run with the virtual machine. Of course, it is well known as to how a virtual machine can be configured and associated with virtual disks and content in the virtual disk and physical disks and content in the physical disk. This template mechanism adds to that capability by allowing the definition concerning connectivity to other template definitions concerning network connectivity, SAN connectivity, iSCSI connectivity, etc. The intent then is to declare the needed connections so that each template can be fit into a tessellated application.

Once defined, the template per each virtual machine is compiled with other templates 31, 33, 35 in a template library 112 at step 1. Naturally, many virtual machine templates will exist in the library and can be used for a myriad of computing goals. It is also well to note that the definitions created for the template library can be done via XML or some other descriptive language and that a schema to constrain the specification of the template document is the preferred embodiment.

From here, certain of the templates are selected (step 2) from the library 112 by a tessellation manager 114. At step 3, the tessellation manager tessellates the virtual system 38 according to the existing objective, e.g., the common computing goal. Continuing the example of an email system of a data center, here the administrator concentrates modeling using the templates and external connectivity specifications of IMAP servers, POP servers, etc.

At step 4, the network of virtual machines so arranged to accomplish the computing goal are the certified or validated. For this, enterprise governance scenarios are contemplated as are user provisioning roles, to name a few. For example, if governance requires that support for an email system includes both IMAP and POP scenarios, the network of virtual machines are evaluated against the policy. On the other hand, if user provisioning contemplates a manager and employee as two of many potential user roles, and each can only access certain levels of enterprise-wide emails, the network of virtual machines is evaluated for this too. Of course, an infinite number of validation scenarios are possible and the foregoing is only representative. Naturally, skilled artisans will be able to contemplate others.

Regardless, once validated, the tessellated applications 100 can be stored in a tessellation application library 120 by way of the tessellation manager 114 using steps 5 and 6. In that other tessellated applications may exist over time (according to the described creation of templates, assembling of virtual machines, and validating same), the library 120 may include other tessellated applications 100', 100", for example, that are used for other related or unrelated computing goals common to its assembly of virtual machines 38' or 38". Intuitively, the other applications may have common templates, such as virtual machine template 31, or may be entirely uncommon in assembly. From here, of course, one or more tessellated applications are made functional so that the computing goals at hand can be accomplished.

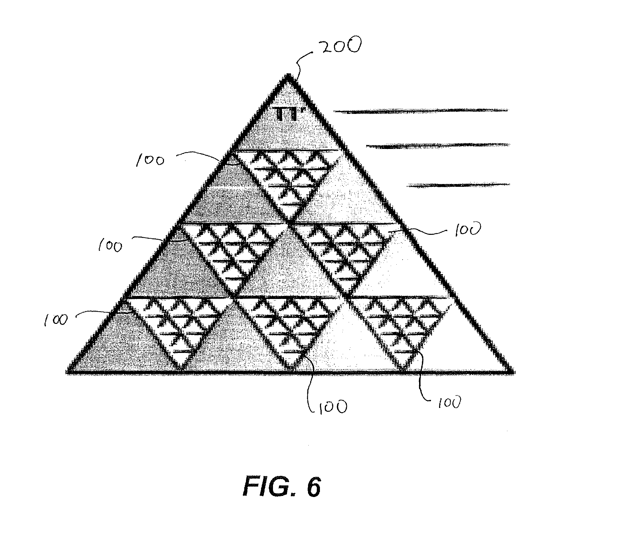

In Figure 6, the notion of allowing nested pluralities of tessellated applications is illustrated. In one embodiment, a tessellated collection 200 of tessellated applications 100 exists. In turn, the collection itself serves to undertake the accomplishing of the computing goal at hand, not just the individual applications 100. Also, the collection could reside in still another library of tessellated collections defining templates thereof that could then be fit with other tessellated collections or individually tessellated applications to achieve still other computing goals.

Regardless of form, skilled artisans will appreciate the foregoing enables configuration with policy or governance statements concerning the allowable deployment configuration. Examples of such include, but are not limited to: insistence that certain parts of the application run in a same subnet; describing which parts or components of the application might be optional (e.g., if a data center does not have enough resources to deploy an entire application, which parts are required); declaring which portions of the application that may be remote from other portions of the application; or the like.

Certain advantages of the invention over the prior art should now be readily apparent. For example, tessellated applications provide a new computing paradigm that counter present-day computing complexities and cumbersomeness that embrace system evolution and regulation. Also, the invention assembles pluralities of virtual machines to achieve computing goals common to the entirety of the machines, not just to an individual machine. Nuances contemplate various libraries, managers, and their interaction and roles. Validation, certification, and applications of pluralities of tessellated applications are other exemplary features, to name a few.

Finally, one of ordinary skill in the art will recognize that additional embodiments are also possible without departing from the teachings of the present invention. This detailed description, and particularly the specific details of the exemplary embodiments disclosed herein, is given primarily for clarity of understanding, and no unnecessary limitations are to be implied, for modifications will become obvious to those skilled in the art upon reading this disclosure and may be made without departing from the spirit or scope of the invention. Relatively apparent modifications, of course, include combining the various features of one or more figures with the features of one or more of other figures.

## Claims

1. A method of assembling virtual machines (38) together as a system (100) instantiated for a common computing goal, preferably assembling virtual machines (38) together on a plurality of physical computing devices (15,15') as a system instantiated for a common data center computing goal, or managing a network of virtual machines instantiated for a common computing goal, comprising:
defining a virtual machine template (31,33,35) for each of said virtual machines per a role of the common computing goal, irrespective of an arrangement or type of the physical computing devices;
defining an external connectivity (40-90) per each said virtual machine template;
tessellating (3) said virtual machines together according to said defined external connectivity; and
accomplishing (4) said common computing goal.

2. The method of claim 1, wherein the defining the virtual machine template further includes defining a configuration (32,34,36).

3. The method of claim 1 or claim 2, wherein the tessellating further includes;
selecting (2) less than all of the virtual machine templates (31,33) available for tessellation from a template library (112), or
selecting certain of said defined virtual machine templates (31) from the library to accomplish said computing goal, or
selecting other than the certain of said defined virtual machine templates (35) from the library to accomplish said computing goal.

4. The method of any preceding claim, further including validating the step of tessellating (3) or the tessellated said virtual machines (38).

5. The method of claim 4, further including defining a collection of successfully validated steps (3) of tessellating, or defining a collection (200) of successfully tessellated virtual machines (38).

6. The method of any preceding claim, further including tessellating (3) the tessellated said other than the certain of said defined virtual machine templates (35) and the tessellated said selected certain of said defined machine templates (31) into still another common data center computing goal.

7. A computer program which when executing on a computer or computer network performs at least the step of tessellating (3) said virtual machines together in accordance with any of claims 1 to 6.

8. A network of virtual machines (38) assembled together as a system instantiated for a common computing goal, comprising:
a template library (112) storing a defined virtual machine template (31,33,35) for each of said virtual machines per a role of the common computing goal, including a defined external connectivity (40-90) with other of said virtual machines;
a template manager (110) to oversee the template library; and
a tessellating manager (114) to select (2) certain of said defined virtual machine templates from the library for assembly into an application (100) accomplishing said common computing goal.

9. The network of virtual machines of claim 8, further including a tessellation application library (120) for said application (100) and other applications (100',100") arranged as selected from other of said defined virtual machines (38', 38") that accomplish other common computing goals.

10. The network of virtual machines of claim 8 or claim 9, wherein the template library (112) further includes a relationship between said virtual machines (38) and a plurality of physical computing devices (15,15').

11. The network of virtual machines of any of claims 8 to 10, further including a validator to determine whether said application (100) accomplishes said common computing goal.

12. The network of virtual machines of any of claims 8 to 11, further including declarations of said application regarding optional components.

13. The network of virtual machines of any of claims 8 to 12, further including a computer program product having computer executable instructions to implement the library (112) and managers (110,114) on one or more physical computing devices (15,15').

14. A data center of virtual machines (38) assembled together on a plurality of physical computing devices (15,15') as a system instantiated for a common data center computing goal, in accordance with the method of claim 1, comprising:
irrespective of an arrangement or type of the physical computing devices, a template library (112) storing a defined virtual machine template (31,33,35) for each of said virtual machines per a role of the common data center computing goal, including a defined external connectivity (40-90) with other said virtual machines per each said virtual machine template;
a template manager (110) to oversee the template library;
a tessellating manager (114) to select (2) certain of said defined virtual machine templates from the library and to assemble (3) the selected certain defined virtual machines into an application (100) accomplishing said common data center computing goal; and
a tessellation application library (120) for said application.
